# EUROPEAN PATENT SPECIFICATION

(11) **EP 2 013 723 B1**
(45) Date of publication and mention of the grant of the patent: **12.06.2019**
(21) Application number: 07761060.8
(22) Date of filing: 20.04.2007
(51) Int. Cl.: G06F 9/455

(54) **REGISTER MAPPING IN EMULATION OF A TARGET SYSTEM ON A HOST SYSTEM**
REGISTERZUORDNUNG BEI DER EMULIERUNG EINES ZIELSYSTEMS AUF EINEM HOSTSYSTEM
CORRÉLATION DE REGISTRES DANS L' ÉMULATION D'UN SYSTÈME CIBLE SUR UN SYSTÈME HÔTE

(30) Priority: 03.05.2006 US 746267 P; 03.05.2006 US 746268 P; 03.05.2006 US 746273 P; 03.05.2006 US 797435 P; 03.05.2006 US 797761 P; 03.05.2006 US 797762 P; 30.01.2007 US 700448; 04.04.2007 US 696691; 04.04.2007 US 696699; 04.04.2007 US 696684
(43) Date of publication of application: 14.01.2009
(73) Proprietor: Sony Interactive Entertainment Inc., Tokyo 108-8270 (JP)
(72) Inventor: SARGAISON, Stewart, Foster City, California 94404 (US); SUBA, Victor, Foster City, California 94404 (US)
(74) Representative: D Young & Co LLP
(86) International application number: PCT/US2007/067142
(87) International publication number: WO 2007/130806

(56) References cited:
- US-A- 4 587 612
- US-A- 6 151 670
- US-A1- 2002 066 086
- US-A1- 2002 066 086
- US-A1- 2004 205 733
- US-B2- 6 884 171
- SMELYANSKIY M ET AL: "Register queues: a new hardware/software approach to efficient software pipelining" PARALLEL ARCHITECTURES AND COMPILATION TECHNIQUES, 2000. PROCEEDINGS. INTERNATIONAL CONFERENCE ON PHILADELPHIA, PA, USA 15-19 OCT. 2000, LOS ALAMITOS, CA, USA,IEEE COMPUT. SOC, US, 15 October 2000 (2000-10-15), pages 3-12, XP010526024 ISBN: 978-0-7695-0622-7
- PROEBSTING T A ET AL: "PROBABILISTIC REGISTER ALLOCATION" ACM SIGPLAN NOTICES, ACM, ASSOCIATION FOR COMPUTING MACHINERY, NEW YORK, NY, US, vol. 27, no. 7, 1 July 1992 (1992-07-01), pages 300-310, XP000332449
- WANG: 'ISSCC 2005: The Cell Microprocessor' REAL WORLD TECHNOLOGIES February 2005, pages 1 - 9
- KAHLE J A ET AL: "Introduction to the Cell multiprocessor", IBM JOURNAL OF RESEARCH AND DEVELOPMENT, INTERNATIONAL BUSINESS MACHINES CORPORATION, NEW YORK, NY, US, vol. 49, no. 4-5, 1 July 2005 (2005-07-01) , pages 589-604, XP002415988, ISSN: 0018-8646

## Description

### FIELD OF THE INVENTION

Embodiments of this invention relate to emulation of a target computer platform on a host computer platform and more particularly to register mapping between target and host systems having different sized registers.

### BACKGROUND OF THE INVENTION

The process of emulating the functionality of a first computer platform (the "target system") on a second computer platform (the "host system") so that the host system can execute programs designed for the target system is known as "emulation." Emulation has commonly been achieved by creating software that converts program instructions designed for the target platform (target code instructions) into the native-language of a host platform (host instructions), thus achieving compatibility. More recently, emulation has also been realized through the creation of "virtual machines," in which the target platform's physical architecture--the design of the hardware itself--is replicated via a virtual model in software.

Two main types of emulation strategies currently are available in the emulation field. The first strategy is known as "interpretation", in which each target code instruction is decoded in turn as it is addressed, causing a small sequence of host instructions then to be executed that are semantically equivalent to the target code instruction. The main component of such an emulator is typically a software interpreter that converts each instruction of any program in the target machine language into a set of instructions in the host machine language, where the host machine language is the code language of the host computer on which the emulator is being used. In some instances, interpreters have been implemented in computer hardware or firmware, thereby enabling relatively fast execution of the emulated programs.

The other main emulation strategy is known as "translation", in which the target instructions are analyzed and decoded. This is also referred to as "recompilation" or "cross-compilation". It is well known that the execution speed of computer programs is often dramatically reduced by interpreters. It is not uncommon for a computer program to run ten to twenty times slower when it is executed via emulation than when the equivalent program is recompiled into target machine code and the target code version is executed. Due to the well known slowness of software emulation, a number of products have successfully improved on the speed of executing source applications by translating portions of the target program at run time into host machine code, and then executing the recompiled program portions. While the translation process may take, e.g., 50 to 100 machine or clock cycles per instruction of the target code, the greater speed of the resulting host machine code is, on average, enough to improve the overall speed of execution of most source applications.

Emulation, whether by interpretation or translation or some combination of both often requires a software simulation of various components of a target system on a host system. It is frequently the case that the target and host systems are based on different types of processor architectures. For example the target device may be a game console, such as the Sony PlayStation®2. PlayStation is a registered trademark of Sony Computer Entertainment Corporation of Tokyo, Japan. This particular device is built around a main processor engine referred to as an Emotion Engine (EE), which is based on a 128-bit central processor unit (CPU) core. The number of registers in the CPU and the size of each (number of bits) are important factors in determining the power and speed of a CPU. For example, the CPU core in the EE uses 128-bit registers. With 128-bit registers, each CPU instruction can manipulate 128 bits of data.

The EE may be emulated by a host system having different processor architecture with different-sized registers. If the host system is based on larger sized registers, this is not a problem as it is relatively straightforward to emulate 128-bit registers with a processor having larger-sized registers. However, if the PlayStation®2 is emulated by a cell-processor based host system (such as the PlayStation®3), a problem arises. The cell processors are a type of parallel processor. The basic configuration of a cell processor includes a "Power Processor Element" ("PPE") (sometimes called "Processing Element", or "PE"), and multiple "Synergistic Processing Elements" ("SPE"). The PPEs and SPEs are linked together by an internal high speed bus dubbed "Element Interconnect Bus" ("EIB"). Cell processors are designed to be scalable for use in applications ranging from the hand held devices to main frame computers. The PPE is the main processor for emulation the PS2 EE. Unfortunately, the PPE uses 64-bit registers, which are smaller than the 128-bit EE CPU registers.

Patent application US-A-2002/066086 relates to a method for dynamic recompilation of source software instructions for execution by a target processor, which considers not only the specific source instructions, but also the intent and purpose of the instructions, to translate and optimize a set of equivalent code for the target processor. The dynamic recompiler determines what the source operation code is trying to accomplish and the optimum way of doing it at the target processor, in an "interpolative" and context sensitive fashion.

Thus, there is a need in the art, for emulating a target system on a host system having smaller sized registers than the target system.

### SUMMARY OF THE INVENTION

Aspects of the present invention are defined in the appended claims 1, 12 and 13.

The above disadvantages are overcome by embodiments of the present invention directed to methods and systems for emulation of a target system on a host system. Statistics for use of a set of registers of a target system processor are determined. Based on the statistics a first subset of the target system registers, including one or more most commonly used registers is determined. The registers in the first subset are directly mapped to a first group of registers of a host system processor. A second subset of the set of target system registers is dynamically mapped to a second group of registers of the host system processor.

### BRIEF DESCRIPTION OF THE DRAWINGS

Exemplary embodiments of the present invention can be readily understood by considering the following detailed description in conjunction with the accompanying drawings, in which:
FIG. 1A is a block diagram of a target device that is to be emulated according to an embodiment of the present invention.
FIG. 1B is a block diagram of an emotion engine of the target device of FIG. 1A.
FIG. 2A is a schematic diagram of a host device that emulates the target device of FIGs. 1A-1B using register mapping according to an embodiment of the present invention.
FIG. 2B is a flow diagram of method of register mapping in emulation of a target device by a host device according to an embodiment of the present invention.
FIG. 3 is a block diagram illustrating an example of mapping a 128-bit target system register to two 64-bit host system registers according to an embodiment of the present invention.
FIG. 4 is a block diagram illustrating an example of mapping registers for 32-bit floating point instructions to 128-bit VMX registers according to an embodiment of the present invention.

### DESCRIPTION OF THE SPECIFIC EMBODIMENTS

Although the following detailed description contains many specific details for the purposes of illustration, anyone of ordinary skill in the art will appreciate that many variations and alterations to the following details are within the scope of the invention. Accordingly, the exemplary embodiments of the invention described below are set forth without any loss of generality to, and without imposing limitations upon, the claimed invention.

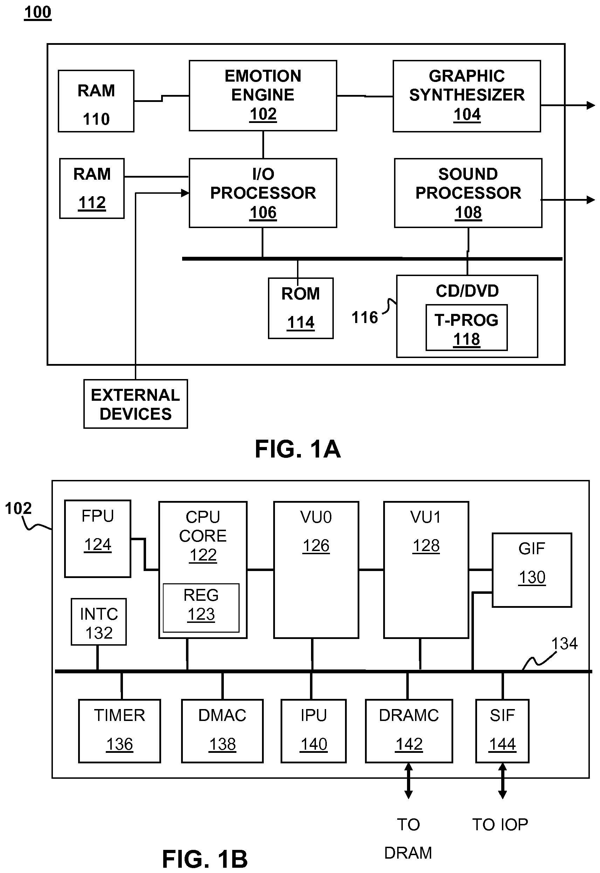

Embodiments of the present invention address emulation of a target system on a host system having different-sized registers. By way of example FIG. 1A depicts a block diagram of a target system **100** in the form of a game console device. The target system is built around a main processor module **102** referred to as an emotion engine, a Graphic Synthesizer **104**, an input/output (I/O) processor (IOP) **106** and a sound processor unit **108**. The emotion engine **102** typically includes a CPU core, co-processors and a system clock and has an associated random access memory (RAM) **110**. The emotion engine **102** performs animation calculation, traverses a scene and converts it to a two-dimensional image that is sent to the Graphic Synthesizer (GS) **104** for rasterization.

As shown in FIG. 1B, the EE **102** includes a CPU core **122**, with an associated floating point unit (FPU)coprocessor **124**, first and second vector co-processors **126, 128,** a graphics interface controller **130** and an interrupt controller (INTC) **132**. The CPU **122**, vector co-processors **126**, **128**, GIF **130** and INTC **132** are coupled to a 128-bit main bus **134.** The FPU **124** is directly coupled to the CPU **122**. The CPU **122** is coupled to a first vector co-processor (VU0) **126**, which is, in turn, coupled to a second vector co-processor (VU1) **128**. The second vector co-processor VU1 **128** is coupled to a graphics interface (GIF) **130**. The EE **102** additional includes a timer **136**, a direct memory access controller (DMAC) **138**, an image data decompression processor (IPU) **140** a DRAM controller **142** and a sub-bus interface (SIF) **144** that facilitates communication between the EE **102** and the IOP **106**.

The CPU core **122** may be a 128-bit processor operating at a 300 megahertz clock frequency using a MIPS instruction set with 64-bit instructions operating as a 2-way superscalar with 128-bit multimedia instructions. These instructions are handled using 128-bit registers **123**. The CPU **122** may include a data cache, an instruction cache and an area of on-chip memory sometimes referred to as a scratchpad. The scratchpad serves as a small local memory that is available so that the CPU **122** can perform certain operations while the main bus **134** is busy transferring code and/or data. The first vector unit **126** may be used for animation and physics calculations. The second vector unit **128** may be used for geometry transformations. The GIF **130** serves as the main interface between the EE **102** and the GS **104**.

The IOP **106** may include a processor for backwards compatibility with prior versions of the target system **100** and its own associated RAM **112**. The IOP **106** handles input and output from external devices such as controllers, USB devices, a hard disc, Ethernet card or modem, and other components of the system such as the sound processor unit **108**, a ROM **114** and a CD/DVD unit **116**. A target program **118** may be stored on a CD/ROM disc loaded in the CD/DVD unit **116**. Instructions from the target program **118** may be stored in EE RAM **108** or IOP RAM **112** and executed by the various processors of the target system **100** in a native machine code that can be read by these processors.

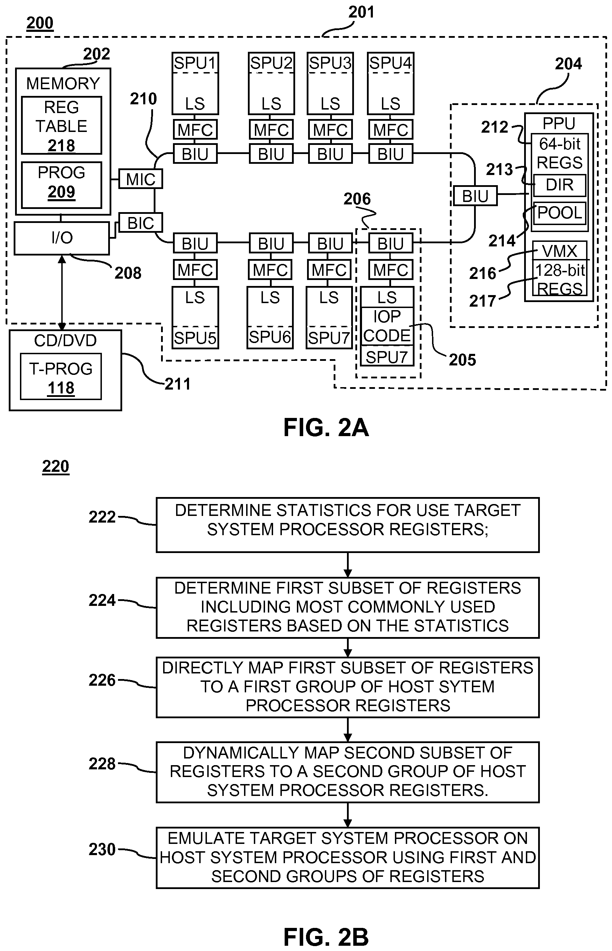

In embodiments of the present invention, the target system **100** may be emulated using a parallel processing host system **200** so that the host system **200** can run programs written in code native to the target system **100** such as target program **118**. FIG. 2A depicts an example of a host system **200** based on a cell processor **201** that may be configured to emulate the target system **100**. The cell processor **201** includes a main memory **202**, a single power processor element (PPE) **204** and eight synergistic processor elements (SPE) **206**. However, the cell processor **201** may be configured with more than one PPE and any number of SPE's. Each SPE **206** includes a synergistic processor unit (SPU) and a local store (LS). The memory **202**, PPE **204**, and SPEs **206** can communicate with each other and with an I/O device **208** over a ring-type element interconnect bus (EIB) **210**. The PPE **204** and SPEs **206** can access the EIB **210** through bus interface units (BIU). The PPE **204** and SPEs **206** can access the main memory **202** over the EIB **210** through memory flow controllers (MFC). The memory **202** may contain an emulation program **209** that implements interpretation and translation of coded instructions written for the target system **100**. These coded instructions may be read from a CD/ROM disc in a CD/DVD reader **211** coupled to the I/O device **208**. A CD/ROM disc containing the target program **118** may be loaded into the CD/DVD reader **211**. At least one of the SPE **206** receives in its local store emulated IOP code **205** having instructions that emulate the IOP **106** described above with respect to FIGs. 1A-1B.

The PPE **204** typically includes different types of registers **212**. These may include thirty-two 64-bit general purpose registers, thirty-two 32-bit floating point registers and thirty-two 128-bit VMS registers. The PPE registers **212** may be divided into a direct-mapped group and a dynamically mapped group. The registers **123** in the CPU of the EE may be selectively mapped to these two groups. Based on statistics on use of the EE registers **123**, the most commonly used EE registers **123** may be direct-mapped to a first group **213** of the PPE registers **212.**

The EE registers **123** that are not direct mapped to registers in the first group **213** are dynamically mapped to a second group **214** of PPE registers **212.** The second group **214** is sometimes referred to herein as a "pool" of dynamically mapped registers. The pool registers in the second group **214** may be rotated to prevent target system instructions from being blocked. As used herein, "rotation" of the registers refers to mapping of registers for subsequent instructions to different registers. By way of example, a sequence of target system instructions may be mapped such that a first instruction may add the value in register r0 to the value in register r10 and store the result in register r11 while a second instruction subtracts the value in register r12 from the value in register r0 and store the result in register rl3. A subsequent target instruction that adds two different values may be mapped such that the value in register r1 is added to the value in register rl4 and the result is stored in register r15. By rotating the pool registers an instruction is less likely to be blocked due to mapping of a target system register to a host system register that is already being used by another instruction.

The "pool" registers **214** may also be used to store intermediate results. By way of example, if a translated target system instruction maps to more than one host system instruction the values calculated by the different host instructions are examples of intermediate results. In embodiments of the present invention, the PPE **204** may optionally include a co-processor **216** (sometimes referred to as a VMX unit) for implementing floating point and single instruction multiple data (SIMD) instruction sets. The co-processor **216** may include 128-bit registers **217.** These co-processor registers **217** may be used for mapping of some of the registers that would otherwise be mapped to the first group **213** or the second group **214.** The PPE **204** may have different types of PPE registers **212.** For example, the PPE **204** may include thirty-two 64-bit general purpose registers, thirty-two 32-bit floating point registers and thirty-two 128-bit registers **217** in the VMX co-processor **216.**

In embodiments of the invention, the host system **200** may emulate the target system **100** according to a method **220** as illustrated in FIG. 2B. At **222** statistics are determined for use of a set of registers **123** of a processor in the target system **100,** e.g., the CPU **122** of the EE **102.** An application boundary interface (ABI) may be used to determine which EE registers **123** are most frequently read and written and most suitable for direct mapping. The mapping for both direct-mapped and dynamically-mapped EE registers **123** may be dynamically reconfigured in response to changes in the statistics. Based on the statistics, a first subset of the registers **123** is determined at **224.** The first subset includes some of the most commonly used registers. By way of example, half the registers **123** may be assigned to the first subset. If there are 32 registers **123,** 16 of them would be assigned to the first subset. The register mapping may be stored in a look-up table **218** stored in the main memory **202.** Different register mapping schemes may be stored in different look-up tables **218.** These different register mapping schemes may be swapped in and out by changing a pointer to a look-up table memory location from one table to another.

At **226** these most commonly used registers are directly mapped to a first group of registers of a processor on the host system **200.** For example the most commonly used CPU registers **123** may be directly mapped to the first group **213** of PPE registers **212** or to some subset of the VMX registers **217.** The remaining CPU registers **123** are dynamically mapped to a second group of host system registers as indicated at **228.** By way of example, the remaining CPU registers **123** may be dynamically mapped to the pool registers **214** or to some subset of the VMX registers **217.** As used herein, direct mapping refers to a consistent mapping between a target system register and one or more corresponding host system registers. Dynamic mapping, by contrast, refers to a mapping between a target system register and whatever pooled host system register or registers happen to be available. It is noted that the sizes of the first group **213** and second group **214** may be selected such that all of the EE registers **123** are direct mapped or are all dynamically mapped or have any intermediate mapping of the EE registers **123** between the two groups **213, 214.** It is further noted that the register mapping may also include mapping of registers for EE co-processors, such as the FPU **124,** VUO **126** and VU1 **128** as well as other target system processors such as the I/O processor **102,** graphic synthesizer **104** and sound processor **108.**

The CPU core **122** may then be emulated on the PPE **204** using the first and second groups of registers as indicated at **230.** By way of example, in an embodiment of the invention, a translator running on the PPE **204** may emulate the EE **102** of the target system **100** by translating EE instructions of the target program **118** into machine code that can be run on the PPE **204.** The PPE **204** may also implement an interpreter that emulates the IOP **106** by interpreting IOP instructions of the target program **118.** The resulting interpreted code instructions **205** may be run on one of the SPE **206.** During the emulation at **230** a processor on the host system **200** (e.g., the PPE **204**) may perform an operation with the host processor that produces an intermediate result. The intermediate result may be temporarily stored in one or more of the pool registers **214.**

The register mapping (direct or dynamic) may be history-dependent, data dependent and/or instruction dependent. For example registers for read-only values that are loaded on the fly, such as direct constants, may be directly mapped. Similarly registers containing values that are loaded on demand and changed when necessary may be temporarily direct mapped for a certain amount of time. As an example of a history and instruction dependent mapping consider a situation where a prior EE instruction is a 128-bit instruction and the result of that instruction only works in 128-bit, e.g., a single instruction multiple data (SIMD) instruction. In such a case the register for that EE instruction may be direct mapped to a 128-bit VMX register. Registers for 128-bit vector floating point instructions on the target system may be mapped to 128-bit VMX registers **217.** Registers for 16-bit integer instructions may be mapped to 64-bit registers on PPE **204.**

Register mapping may also be driven by the type of device being emulated by the host system. For example, EE, registers for SIMD instructions may be directly mapped to the 128-bit VMX registers **217.** Similarly, registers for 128-bit vector floating point instructions on VUO **126** may be mapped to the 128-bit VMX registers **217.**

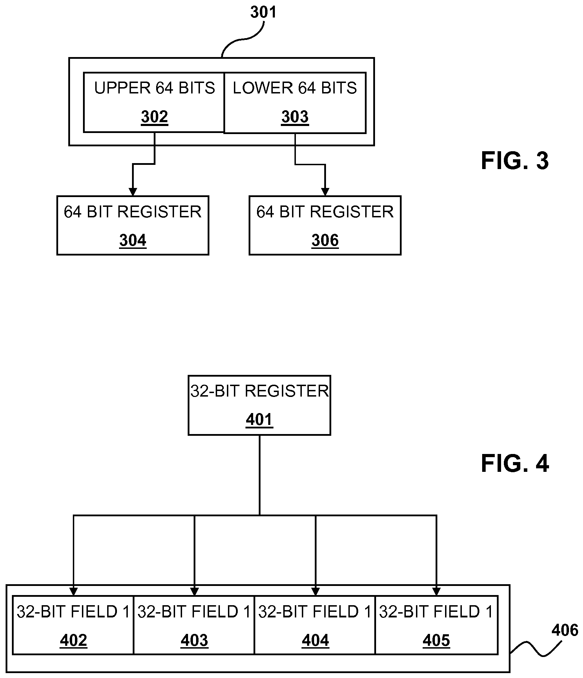

As noted above, the CPU registers **123** may be of a larger size than the PPE registers **212.** Specifically the CPU registers **123** may be 128-bit registers and the PPE registers **212** may be 64-bit registers. As shown in FIG. 3, a 128-bit target system register **301** may be mapped to two 64-bit host system registers **304, 306** by dividing the 128-bit register **301** into a lower 64-bit field **302** and an upper 64-bit field **303.** The upper field **302** may be mapped to host system register **304** while the lower field **303** may be mapped to host system register **306.** The emulation of parallel target system instructions such as parallel adds with 128-bit registers depends partly on the nature of the operands. If the operands for an instruction are in 128-bit registers, the operation is performed as a 128-bit operation with a carry between the highest bit of the lower field **303** and the lowest bit of the upper field **302.** If the operands are in 64-bit registers two or more operations are performed with no carry between the highest bit of the lower field **303** and the lowest bit of the upper field **302.**

Registers for 32-bit floating point instructions may be mapped to 128-bit VMX registers **217** as shown in FIG. 4. Specifically each the value for a 32-bit target system register **401** is mapped to each of four 32-bit fields **402, 403, 404, 405** of a 128-bit host system register **406.**

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise. the highest bit of the lower field **303** and the lowest bit of the upper field **302.** If the operands are in 64-bit registers two or more operations are performed with no carry between the highest bit of the lower field **303** and the lowest bit of the upper field **302.**

Registers for 32-bit floating point instructions may be mapped to 128-bit VMX registers **217** as shown in FIG. 4. Specifically each the value for a 32-bit target system register **401** is mapped to each of four 32-bit fields **402, 403, 404, 405** of a 128-bit host system register **406.**

The scope of the present invention should be determined not with reference to the above description but should, instead, be determined with reference to the appended claims, along with their full scope of equivalents. In the claims that follow, the indefinite article "A", or "An" refers to a quantity of one or more of the item following the article, except where expressly stated otherwise. The appended claims are not to be interpreted as including means-plus-function limitations, unless such a limitation is explicitly recited in a given claim using the phrase "means for."

## Claims

1. Computer software having program code which, when executed by a host system , causes the host system to carry out a method for emulation of a target system, the method comprising:
determining (222) statistics for use of a set of registers of a target system processor;
based on the statistics, determining (224) a first subset of registers of the set of registers, the first subset including one or more most commonly used registers;
directly mapping (226) the first subset of registers to a first group of registers of a host system processor so as to provide a consistent mapping between a target system register and one or more corresponding host system registers;
dynamically mapping (228) a second subset of the set of registers to a second group of registers of the host system processor, so that a target system register is mapped dynamically to whatever host system register or registers of the second group happen to be available; and
emulating (230) the target system processor on the host system processor using the first and second groups of registers of the host system processor;
wherein some of the registers in the set of registers of the target system processor are larger than the registers in the first and second groups of registers of the host system processor, and some of the registers in the set of registers of the target system processor are smaller than the registers in the first and second groups of registers of the host system processor,
wherein each of the registers in the set of registers of the target system processor that are larger than the registers in the first and second groups of registers of the host system processor are mapped to multiple registers in the first and/or second groups of registers of the host system processor, and
wherein one or more registers in the set of registers of the target system processor that are smaller than the registers in the first and second groups of registers of the host system processor are mapped to each field of a larger register in the first or second groups of registers of the host system processor, wherein the larger register is divided into fields of an equivalent size to the smaller register.

2. The computer software of claim 1 wherein emulating the target system includes translating instructions for the target system processor.

3. The computer software of claim 1 wherein the registers in the set of registers of the target system processor include 128-bit registers and the registers in the first and second groups of registers of the host system processor include 64-bit registers.

4. The computer software of claim 1 wherein directly mapping the first subset of registers or dynamically mapping the second subset of registers includes mapping a lower field of a target system register to a first host system register and mapping an upper field of the target system register to a second host system register.

5. The computer software of claim 1 wherein the host system processor is a power processor element of a cell processor having a power processor element and a plurality of synergistic processor elements linked together by an internal bus, the synergistic processing elements each having an associated local memory.

6. The computer software of claim 5 wherein one or more of the registers in the first and/or second groups are registers in a co-processor unit of the power processor element.

7. The computer software of claim 1, further comprising performing an operation with the host processor that produces an intermediate result and storing the intermediate result in one or more registers of the second group of registers.

8. The computer software of claim 1 wherein the target system processor is an emotion engine, being a processor having a CPU core, co-processors, a system clock and an associated random access memory.

9. The computer software of claim 1, further comprising rotating the dynamic mapping of the registers in the second subset.

10. The computer software of claim 8, further comprising emulating the emotion engine with the host system processor by translating instructions for the emotion engine into machine code that is readable by the host system processor, and wherein the target system includes one or more additional processors, the method further comprising emulating the one or more additional processors by interpreting instructions for the one or more additional processors and running the interpreted instructions on the host system processor or one or more co-processors associated with the host system processor

11. The computer software of claim 1, further comprising dynamically reconfiguring the direct mapping of the first subset of registers and/or the dynamic mapping of the second subset of registers.

12. A host system for emulation of a target system, comprising:
one or more host system processors;
a memory coupled to the one or more host system processors;
a set of processor executable instructions embodied in the memory, the processor executable instructions including instructions for implementing a method for emulation of a target system on a host system, the method including:
determining (222) statistics for use of a set of registers of a target system processor;
based on the statistics, determining (224) a first subset of registers of the set of registers, the first subset including one or more most commonly used registers;
directly mapping (226) the first subset of registers to a first group of registers of a host system processor so as to provide a consistent mapping between a target system register and one or more corresponding host system registers;
dynamically mapping (228) a second subset of the set of registers to a second group of registers of the host system processor, so that a target system register is mapped dynamically to whatever host system register or registers of the second group happen to be available; and
emulating (230) the target system processor on the host system processor using the first and second groups of registers of the host system processor;
wherein some of the registers in the set of registers of the target system processor are larger than the registers in the first and second groups of registers of the host system processor, and some of the registers in the set of registers of the target system processor are smaller than the registers in the first and second groups of registers of the host system processor,
wherein each of the registers in the set of registers of the target system processor that are larger than the registers in the first and second groups of registers of the host system processor are mapped to multiple registers in the first and/or second groups of registers of the host system processor, and
wherein one or more registers in the set of registers of the target system processor that are smaller than the registers in the first and second groups of registers of the host system processor are mapped to each field of a larger register in the first or second groups of registers of the host system processor, wherein the larger register is divided into fields of an equivalent size to the smaller register.

13. A method for emulation of a target system on a host system, the method comprising:
determining (222) statistics for use of a set of registers of a target system processor;
based on the statistics, determining (224) a first subset of registers of the set of registers, the first subset including one or more most commonly used registers;
directly mapping (226) the first subset of registers to a first group of registers of a host system processor so as to provide a consistent mapping between a target system register and one or more corresponding host system registers; and
dynamically mapping (228) a second subset of the set of registers to a second group of registers of the host system processor, so that a target system register is mapped dynamically to whatever host system register or registers of the second group happen to be available; and
emulating (230) the target system processor on the host system processor using the first and second groups of registers of the host system processor;
wherein some of the registers in the set of registers of the target system processor are larger than the registers in the first and second groups of registers of the host system processor, and some of the registers in the set of registers of the target system processor are smaller than the registers in the first and second groups of registers of the host system processor,
wherein each of the registers in the set of registers of the target system processor that are larger than the registers in the first and second groups of registers of the host system processor are mapped to multiple registers in the first and/or second groups of registers of the host system processor, and
wherein one or more registers in the set of registers of the target system processor that are smaller than the registers in the first and second groups of registers of the host system processor are mapped to each field of a larger register in the first or second groups of registers of the host system processor, wherein the larger register is divided into fields of an equivalent size to the smaller register.

## Patentansprüche

1. Computersoftware mit Programmcode, der bei Ausführung durch ein Host-System bewirkt, dass das Host-System ein Verfahren zur Emulation eines Zielsystems ausführt, wobei das Verfahren Folgendes umfasst:
Bestimmen (222) von Statistiken zur Verwendung einer Menge von Registern eines Zielsystemprozessors;
basierend auf den Statistiken, Bestimmen (224) einer ersten Teilmenge von Registern der Menge von Registern, wobei die erste Teilmenge ein oder mehrere am häufigsten verwendete Register beinhaltet;
direktes Abbilden (226) der ersten Teilmenge von Registern zu einer ersten Gruppe von Registern eines Host-Systemprozessors, sodass eine konsistente Abbildung zwischen einem Zielsystemregister und einem oder mehreren entsprechenden Host-Systemregistern bereitgestellt wird;
dynamisches Abbilden (228) einer zweiten Teilmenge der Menge von Registern zu einer zweiten Gruppe von Registern des Host-Systemprozessors, sodass ein Zielsystemregister dynamisch zu einem oder mehreren beliebigen Host-Systemregistern der zweiten Gruppe, die gerade zur Verfügung stehen, abgebildet wird; und
Emulieren (230) des Zielsystemprozessors auf dem Host-Systemprozessor unter Verwendung der ersten und zweiten Gruppe von Registern des Host-Systemprozessors;
wobei manche der Register in der Menge von Registern des Zielsystemprozessors größer sind als die Register in der ersten und zweiten Gruppe von Registern des Host-Systemprozessors und manche der Register in der Menge von Registern des Zielsystemprozessors kleiner sind als die Registern der ersten und zweiten Gruppe von Registern des Host-Systemprozessors;
wobei jedes der Register in der Menge von Registern des Zielsystemprozessors, die größer als die Register in der ersten und zweiten Gruppe von Registern des Host-Systemprozessors sind, zu mehreren Registern in der ersten und/oder zweiten Gruppe von Registern des Host-Systemprozessors abgebildet werden, und
wobei ein oder mehrere Register in der Menge von Registern des Zielsystemprozessors, die kleiner als die Register der ersten und zweiten Gruppe von Registern des Host-Systemprozessors sind, zu jedem Feld eines größeren Registers in der ersten oder zweiten Gruppe von Registern des Host-Systemprozessors abgebildet werden, wobei das größere Register in Felder einer äquivalenten Größe zu dem kleineren Register unterteilt ist.

2. Computersoftware nach Anspruch 1, wobei das Emulieren des Zielsystems ein Übersetzen von Befehlen für den Zielsystemprozessor beinhaltet.

3. Computersoftware nach Anspruch 1, wobei die Register in der Menge von Registern des Zielsystemprozessors 128-Bit-Register beinhalten und die Register in der ersten und zweiten Gruppe von Registern des Host-Systemprozessors 64-Bit-Register beinhalten.

4. Computersoftware nach Anspruch 1, wobei das direkte Abbilden der ersten Teilmenge von Registern oder das dynamische Abbilden der zweiten Teilmenge von Registern ein Abbilden eines niedrigeren Feldes eines Zielsystemregisters zu einem ersten Host-Systemregister und ein Abbilden eines höheren Feldes des Zielsystemregisters zu einem zweiten Host-Systemregister beinhaltet.

5. Computersoftware nach Anspruch 1, wobei der Host-Systemprozessor ein Leistungsprozessorelement eines Zellenprozessors ist, der ein Leistungsprozessorelement und mehrere sind synergistische Prozessorelemente umfasst, die durch einen internen Bus miteinander verknüpft sind, wobei die synergistischen Verarbeitungselemente jeweils einen assoziierten lokalen Speicher aufweisen.

6. Computersoftware nach Anspruch 5, wobei ein oder mehrere der Register in der ersten und/oder zweiten Gruppe Register in einer Coprozessoreinheit des Leistungsprozessorelements sind.

7. Computersoftware nach Anspruch 1, ferner umfassend Durchführen einer Operation mit dem Host-Prozessor, die ein Zwischenergebnis erzeugt, und Speichern des Zwischenergebnisses in einem oder mehreren Registern der zweiten Gruppe von Registern.

8. Computersoftware nach Anspruch 1, wobei der Zielsystemprozessor eine Emotion-Engine ist, die ein Prozessor mit einem CPU-Kern, Coprozessoren, einem Systemtakt und einem assoziierten Direktzugriffsspeicher ist.

9. Computersoftware nach Anspruch 1, ferner umfassend Rotieren der dynamischen Abbildung der Register in der zweiten Teilmenge.

10. Computersoftware nach Anspruch 8, ferner umfassend Emulieren der Emotion-Engine mit dem Host-Systemprozessor durch Übersetzen von Befehlen für die Emotion-Engine in Maschinencode, der durch den Host-Systemprozessor lesbar ist, und wobei das Zielsystem einen oder mehrere zusätzliche Prozessoren beinhaltet, wobei das Verfahren ferner Emulieren des einen oder der mehreren zusätzlichen Prozessoren durch Interpretieren von Befehlen für den einen oder die mehreren zusätzlichen Prozessoren und Ausführen der interpretierten Befehle auf dem Host-Systemprozessor oder einem oder mehreren Coprozessoren, die mit dem Host-Systemprozessor assoziiert sind, umfasst.

11. Computersoftware nach Anspruch 1, ferner umfassend dynamisches Neukonfigurieren der direkten Abbildung der ersten Teilmenge von Registern und/oder der dynamischen Abbildung der zweiten Teilmenge von Registern.

12. Host-System zur Emulation eines Zielsystems, umfassend:
einen oder mehrere Host-Systemprozessoren;
einen Speicher, der mit dem einen oder den mehreren Host-Systemprozessoren gekoppelt ist;
eine Menge von prozessorausführbaren Befehlen, die in dem Speicher umgesetzt sind, wobei die prozessorausführbaren Befehle Befehle zum Implementieren eines Verfahrens zur Emulation eines Zielsystems auf einem Host-System beinhalten, wobei das Verfahren Folgendes beinhaltet:
Bestimmen (222) von Statistiken zur Verwendung einer Menge von Registern eines Zielsystemprozessors;
basierend auf den Statistiken, Bestimmen (224) einer ersten Teilmenge von Registern der Menge von Registern, wobei die erste Teilmenge ein oder mehrere am häufigsten verwendete Register beinhaltet;
direktes Abbilden (226) der ersten Teilmenge von Registern zu einer ersten Gruppe von Registern eines Host-Systemprozessors, sodass eine konsistente Abbildung zwischen einem Zielsystemregister und einem oder mehreren entsprechenden Host-Systemregistern bereitgestellt wird;
dynamisches Abbilden (228) einer zweiten Teilmenge der Menge von Registern zu einer zweiten Gruppe von Registern des Host-Systemprozessors, sodass ein Zielsystemregister dynamisch zu einem oder mehreren beliebigen Host-Systemregistern der zweiten Gruppe, die gerade zur Verfügung stehen, abgebildet wird; und
Emulieren (230) des Zielsystemprozessors auf dem Host-Systemprozessor unter Verwendung der ersten und zweiten Gruppe von Registern des Host-Systemprozessors;
wobei manche der Register in der Menge von Registern des Zielsystemprozessors größer sind als die Register in der ersten und zweiten Gruppe von Registern des Host-Systemprozessors und manche der Register in der Menge von Registern des Zielsystemprozessors kleiner sind als die Register in der ersten und zweiten Gruppe von Registern des Host-Systemprozessors,
wobei jedes der Register in der Menge von Registern des Zielsystemprozessors, die größer als sie Register in der ersten und zweiten Gruppe von Registern des Host-Systemprozessors sind, zu mehreren Registern in der ersten und/oder zweiten Gruppe von Registern des Host-Systemprozessors abgebildet werden, und
wobei ein oder mehrere Register in der Menge von Registern des Zielsystemprozessors, die kleiner als die Register in der ersten und zweiten Gruppe von Registern des Host-Systemprozessors sind, zu jedem Feld eines größeren Registers in der ersten oder zweiten Gruppe von Registern des Host-Systemprozessors abgebildet werden, wobei das größere Register Felder einer äquivalenten Größe zu dem kleineren Register unterteilt ist.

13. Verfahren zur Emulation eines Zielsystems auf einem Host-System, wobei das Verfahren Folgendes umfasst:
Bestimmen (222) von Statistiken zur Verwendung einer Menge von Registern eines Zielsystemprozessors;
basierend auf den Statistiken, Bestimmen (224) einer ersten Teilmenge von Registern der Menge von Registern, wobei die erste Teilmenge ein oder mehrere am häufigsten verwendete Register beinhaltet;
direktes Abbilden (226) der ersten Teilmenge von Registern zu einer ersten Gruppe von Registern eines Host-Systemprozessors, sodass eine konsistente Abbildung zwischen einem Zielsystemregister und einem oder mehreren entsprechenden Host-Systemregistern bereitgestellt wird; und
dynamisches Abbilden (228) einer zweiten Teilmenge der Menge von Registern zu einer zweiten Gruppe von Registern des Host-Systemprozessors, sodass ein Zielsystemregister dynamisch zu einem oder mehreren beliebigen Host-Systemregistern der zweiten Gruppe, die gerade zur Verfügung stehen, abgebildet wird; und
Emulieren (230) des Zielsystemprozessors auf dem Host-Systemprozessor unter Verwendung der ersten und zweiten Gruppe von Registern des Host-Systemprozessors;
wobei manche der Register in der Menge von Registern des Zielsystemprozessors größer sind als die Register in der ersten und zweiten Gruppe von Registern des Host-Systemprozessors und manche der Register in der Menge von Registern des Zielsystemprozessors kleiner sind als die Register in der ersten und zweiten Gruppe von Registern des Host-Systemprozessors,
wobei jedes der Register in der Menge von Registern des Zielsystemprozessors, die größer als sie Register in der ersten und zweiten Gruppe von Registern des Host-Systemprozessors sind, zu mehreren Registern in der ersten und/oder zweiten Gruppe von Registern des Host-Systemprozessors abgebildet werden, und
wobei ein oder mehrere Register in der Menge von Registern des Zielsystemprozessors, die kleiner als die Register in der ersten und zweiten Gruppe von Registern des Host-Systemprozessors sind, zu jedem Feld eines größeren Registers in der ersten oder zweiten Gruppe von Registern des Host-Systemprozessors abgebildet werden, wobei das größere Register Felder einer äquivalenten Größe zu dem kleineren Register unterteilt ist.

## Revendications

1. Logiciel informatique ayant un code de programme qui, lorsqu'il est exécuté par un système hôte, amène le système hôte à mettre en oeuvre un procédé d'émulation d'un système cible, le procédé comprenant :
la détermination (222) de statistiques pour l'utilisation d'un ensemble de registres d'un processeur de système cible ;
sur la base des statistiques, la détermination (224) d'un premier sous-ensemble de registres de l'ensemble de registres, le premier sous-ensemble comprenant un ou plusieurs registres utilisés le plus souvent ;
le mappage de manière directe (226) du premier sous-ensemble de registres d'un premier groupe de registres d'un processeur de système hôte de façon à fournir un mappage cohérent entre un registre de système cible et un ou plusieurs registres de système hôte correspondants ;
le mappage de manière dynamique (228) d'un second sous-ensemble de l'ensemble de registres sur un second groupe de registres du processeur de système hôte, de sorte qu'un registre de système cible est mappé dynamiquement sur n'importe quel registre ou registres du système hôte du second groupe qui se trouvent disponibles ; et
l'émulation (230) du processeur de système cible sur le processeur de système hôte à l'aide des premier et second groupes de registres du processeur de système hôte ;
dans lequel certains des registres dans l'ensemble de registres du processeur de système cible sont plus importants que les registres dans les premier et second groupes de registres du processeur de système hôte, et certains des registres dans l'ensemble des registres du processeur de système cible sont plus petits que les registres dans les premier et second groupes de registres du processeur de système hôte,
dans lequel chacun des registres dans l'ensemble de registres du processeur de système cible qui sont plus importants que les registres dans les premier et second groupes de registres du processeur de système hôte sont mappés sur de multiples registres dans les premier et/ou second groupes de registres du processeur de système hôte, et
dans lequel un ou plusieurs registres dans l'ensemble de registres du processeur de système cible qui sont plus petits que les registres dans les premier et second groupes de registres du processeur de système hôte sont mappés sur chaque champ d'un registre plus important dans les premier et second groupes de registres du processeur de système hôte, dans lequel le registre plus important est divisé en champs d'une taille équivalente au registre plus petit.

2. Logiciel informatique selon la revendication 1, dans lequel l'émulation du système cible comprend la traduction d'instructions pour le processeur de système cible.

3. Logiciel informatique selon la revendication 1, dans lequel les registres dans l'ensemble de registres du processeur de système cible comprennent des registres de 128 bits et les registres dans les premier et second groupes de registres du processeur de système hôte comprennent des registres de 64 bits.

4. Logiciel informatique selon la revendication 1, dans lequel mapper directement premier sous-ensemble de registres ou mapper dynamiquement le second sous-ensemble de registres comprend le mappage d'un champ inférieur d'un registre de système cible sur un premier registre de système hôte et le mappage d'un champ supérieur du registre de système cible sur un second registre de système hôte.

5. Logiciel informatique selon la revendication 1, dans lequel le processeur de système hôte est un élément de processeur de puissance d'un processeur de cellules ayant un élément de processeur de puissance et une pluralité d'éléments de processeur synergiques reliés les uns aux autres par un bus interne, les éléments de traitement synergiques ayant chacun une mémoire locale associée.

6. Logiciel informatique selon la revendication 5, dans lequel un ou plusieurs des registres dans les premier et/ou second groupes sont des registres dans une unité de coprocesseur de l'élément de processeur de puissance.

7. Logiciel informatique selon la revendication 1, comprenant en outre l'exécution d'une opération avec le processeur hôte qui produit un résultat immédiat et le stockage du résultat intermédiaire dans un ou plusieurs registres du second groupe de registres.

8. Logiciel informatique selon la revendication 1, dans lequel le processeur de système cible est un moteur d'émotion, qui est un processeur ayant un coeur d'unité centrale (CPU), des co-processeurs, une horloge système et une mémoire d'accès aléatoire associée.

9. Système informatique selon la revendication 1, comprenant en outre la rotation du mappage dynamique des registres dans le second sous-ensemble.

10. Logiciel informatique selon la revendication 8, comprenant en outre l'émulation du moteur d'émotion avec le processeur de système hôte par la traduction d'instructions pour le moteur d'émotion dans un code de machine qui est lisible par le processeur de système hôte, et dans lequel le système cible comprend un ou plusieurs processeurs supplémentaires, le procédé comprenant en outre l'émulation du ou des processeurs supplémentaires en interprétant des instructions pour le ou les processeurs supplémentaires et en exécutant les instructions interprétées sur le processeur de système hôte ou un ou plusieurs coprocesseurs associés avec le processeur de système hôte.

11. Logiciel informatique selon la revendication 1, comprenant en outre la reconfiguration de manière dynamique du mappage direct du premier sous-ensemble de registres et/ou le mappage dynamique du second sous-ensemble de registres.

12. Système hôte d'émulation d'un système cible, comprenant :
un ou plusieurs processeurs de système hôte ;
une mémoire couplée à l'un ou aux plusieurs processeurs de système hôte ;
un ensemble d'instructions exécutables par un processeur intégré dans la mémoire, les instructions exécutables par un processeur comprenant des instructions permettant de mettre en oeuvre un procédé d'émulation d'un système cible sur un système hôte, le procédé comprenant :
la détermination (222) de statistiques pour l'utilisation d'un ensemble de registres d'un processeur de système cible ;
sur la base des statistiques, la détermination (224) d'un premier sous-ensemble de registres de l'ensemble de registres, le premier sous-ensemble comprenant un ou plusieurs registres utilisés le plus souvent;
le mappage de manière directe (226) du premier sous-ensemble de registres d'un premier groupe de registres d'un processeur de système hôte de façon à fournir un mappage cohérent entre un registre de système cible et un ou plusieurs registres de système hôte correspondants ;
le mappage de manière dynamique (228) d'un second sous-ensemble de l'ensemble de registres sur un second groupe de registres du processeur de système hôte, de sorte qu'un registre de système cible est mappé dynamiquement sur n'importe quel registre ou registres du système hôte du second groupe qui se trouvent disponibles ; et
l'émulation (230) du processeur de système cible sur le processeur de système hôte à l'aide des premier et second groupes de registres du processeur de système hôte ;
dans lequel certains des registres dans l'ensemble de registres du processeur de système cible sont plus importants que les registres dans les premier et second groupes de registres du processeur de système hôte, et certains des registres dans l'ensemble des registres du processeur de système cible sont plus petits que les registres dans les premier et second groupes de registres du processeur de système hôte,
dans lequel chacun des registres dans l'ensemble de registres du processeur de système cible qui sont plus importants que les registres dans les premier et second groupes de registres du processeur de système hôte sont mappés sur de multiples registres dans les premier et/ou second groupes de registres du processeur de système hôte, et
dans lequel un ou plusieurs registres dans l'ensemble de registres du processeur de système cible qui sont plus petits que les registres dans les premier et second groupes de registres du processeur de système hôte sont mappés sur chaque champ d'un registre plus important dans les premier et second groupes de registres du processeur de système hôte, dans lequel le registre plus important est divisé en champs d'une taille équivalente au registre plus petit.

13. Procédé d'émulation d'un système cible sur un système hôte, le procédé comprenant :
la détermination (222) de statistiques pour l'utilisation d'un ensemble de registres d'un processeur de système cible ;
sur la base des statistiques, la détermination (224) d'un premier sous-ensemble de registres de l'ensemble de registres, le premier sous-ensemble comprenant un ou plusieurs registres utilisés le plus souvent ;
le mappage de manière directe (226) du premier sous-ensemble de registres d'un premier groupe de registres d'un processeur de système hôte de façon à fournir un mappage cohérent entre un registre de système cible et un ou plusieurs registres de système hôte correspondants ; et
le mappage de manière dynamique (228) d'un second sous-ensemble de l'ensemble de registres sur un second groupe de registres du processeur de système hôte, de sorte qu'un registre de système cible est mappé dynamiquement sur n'importe quel registre ou registres du système hôte du second groupe qui se trouvent disponibles ; et
l'émulation (230) du processeur de système cible sur le processeur de système hôte à l'aide des premier et second groupes de registres du processeur de système hôte ;
dans lequel certains des registres dans l'ensemble de registres du processeur de système cible sont plus importants que les registres dans les premier et second groupes de registres du processeur de système hôte, et certains des registres dans l'ensemble des registres du processeur de système cible sont plus petits que les registres dans les premier et second groupes de registres du processeur de système hôte,
dans lequel chacun des registres dans l'ensemble de registres du processeur de système cible qui sont plus importants que les registres dans les premier et second groupes de registres du processeur de système hôte sont mappés sur de multiples registres dans les premier et/ou second groupes de registres du processeur de système hôte, et
dans lequel un ou plusieurs registres dans l'ensemble de registres du processeur de système cible qui sont plus petits que les registres dans les premier et second groupes de registres du processeur de système hôte sont mappés sur chaque champ d'un registre plus important dans les premier et second groupes de registres du processeur de système hôte, dans lequel le registre plus important est divisé en champs d'une taille équivalente au registre plus petit.
